# EUROPÄISCHE PATENTANMELDUNG

(11) **EP 3 654 476 A2**
(43) Veröffentlichungstag der Anmeldung: **20.05.2020**
(21) Anmeldenummer: 19207634.7
(22) Anmeldetag: 07.11.2019
(51) Int. Cl.: H02G 11/00, B60L 53/30, E04B 1/04, E04H 6/08

(54) **BETONFERTIGBAUTEIL UND LADESYSTEM**

(30) Priorität: 19.11.2018 DE 102018129016
(71) Anmelder: Innogy SE, 45128 Essen (DE)
(72) Erfinder: DEMBEK, Florian, 45701 Herten (DE); MEIER, Jörg, 54455 Serrig (DE); VOGEL, Gerald, 44229 Dortmund (DE)
(74) Vertreter: Cohausz & Florack

(57) **Zusammenfassung**

Die Anmeldung betrifft ein Betonfertigbauteil (100, 200, 300) für Parkanordnungen (321), insbesondere Parkhäuser (321), aufweisend mindestens eine Führungsschiene (102, 202, 302), eingerichtet zum beweglichen Tragen mindestens eines Ladekabelträgerelements (214, 314.1, 314.2), und mindestens eine Ladevorrichtungsbefestigungsanordnung (106, 306), eingerichtet zum Befestigen mindestens einer Ladevorrichtung (328), eingerichtet zum Laden von Elektrofahrzeugen, an dem Betonfertigbauteil (100, 200, 300).

## Beschreibung

Die Anmeldung betrifft ein Betonfertigbauteil für Parkanordnungen. Darüber hinaus betrifft die Anmeldung ein Ladesystem für Elektrofahrzeuge mit einem Betonfertigbauteil, eine Parkanordnung und eine Verwendung eines Betonfertigbauteils.

Der Aufbau der Ladeinfrastruktur ist von entscheidender Bedeutung für eine flächendeckende Etablierung von Elektromobilität. Dazu ist es insbesondere notwendig, in öffentlichen als auch in teilöffentlichen Räumen Ladestationen bzw. Ladesysteme für Elektrofahrzeuge in großem Maße zu installieren.

Neben der Aufstellung von Ladestationen an Straßen und Wegen bietet sich insbesondere die Installierung von Ladesystemen in Parkanordnungen an, insbesondere in Form von Parkhäusern. Es ist hierbei bekannt, eine Parkbucht bzw. einen Parkplatz mit einer am Rand der Parkbucht angeordneten Ladestation (z.B. eine Ladesäule) zu versehen. Die Ladestation kann hierbei über mindestens ein festangeschlagenes Ladekabel und/oder über mindestens einen Ladeanschluss verfügen, der mit einem Ladekabel gekoppelt werden kann.

Die Installation von bekannten Ladesystemen in Parkanordnungen gestaltet sich aufwendig, so dass es, insbesondere für eine flächendeckende Etablierung von Elektromobilität, ein stetiges Anliegen ist, die Installation von Ladesystemen in Parkanordnungen, insbesondere in Form von Parkhäusern, zu vereinfachen.

Neben der aufwendigen Installation eines Ladesystems in einem Parkhaus ist es beim Stand der Technik von Nachteil, dass die Nutzerfreundlichkeit der derzeit installierten Ladesysteme beschränkt ist. In Elektrofahrzeugen unterschiedlichen Typs ist der jeweilige elektrische Ladeanschluss zum Anschließen eines Ladekabels unterschiedlich positioniert (vorne am Fahrzeug, hinten am Fahrzeug oder an einer Fahrzeugseite). Dies kann abhängig vom Fahrzeugtyp und der jeweiligen Parksituation in einer Parkanordnung sowie Aufstellort der Ladevorrichtung an der Parkbucht dazu führen, dass ein Nutzer nur mit erheblichem Aufwand eine elektrische Verbindung zwischen der Ladevorrichtung und seinem Elektrofahrzeug herstellen kann. Zumindest ist es regelmäßig erforderlich, dass der Nutzer sein Fahrzeug nur in einer bestimmten Richtung (vorwärts oder rückwärts) in eine Parkbucht einparken kann, um ein elektrisches Verbinden der Ladevorrichtung mit dem elektrischen Ladeanschluss des Elektrofahrzeugs zu ermöglichen.

Daher liegt der Anmeldung die Aufgabe zugrunde, bei einem Ladesystem für eine Parkanordnung, insbesondere in Form eines Parkhauses, die Nutzerfreundlichkeit zu erhöhen und insbesondere gleichzeitig die Installation von einem Ladesystem in einer Parkanordnung zu erleichtern.

Die Aufgabe wird gemäß einem ersten Aspekt der Anmeldung durch ein Betonfertigbauteil für Parkanordnungen, insbesondere Parkhäuser, nach Anspruch 1 gelöst. Das Betonfertigbauteil umfasst mindestens eine Führungsschiene, eingerichtet zum beweglichen Tragen mindestens eines Ladekabelträgerelements. Das Betonfertigbauteil umfasst mindestens eine Ladevorrichtungsbefestigungsanordnung, eingerichtet zum Befestigen mindestens einer Ladevorrichtung an dem Betonfertigbauteil, wobei die Ladevorrichtung eingerichtet ist zum Laden von Elektrofahrzeugen.

Im Gegensatz zum Stand der Technik wird anmeldungsgemäß ein Betonfertigteil für eine Parkanordnung mit mindestens einer darin integrierten Führungsschiene bereitgestellt, so dass bei einem Ladesystem einer Parkanordnung die Nutzerfreundlichkeit beim Laden von Elektrofahrzeugen verbessert wird. Gleichzeitig wird anmeldungsgemäß der Installationsaufwand eines Ladesystems in einer Parkanordnung aufgrund des vorgefertigten Betonfertigbauteils signifikant reduziert.

Die Parkanordnung ist insbesondere ein Parkhaus oder eine Parkgarage, kann jedoch auch ein Parkplatz (ohne Dach) sein, der beispielsweise über Betonseitenwände verfügt. Die Parkanordnung dient zum Abstellen von mindestens einem Elektrofahrzeug.

Die Parkanordnung kann aus einer Mehrzahl von miteinander verbindbaren anmeldungsgemäßen Betonfertigbauteilen gebildet werden. Es versteht sich, dass weitere (Beton-) Bauteile in einer Parkanordnung verbaut sein können, um diese zu bilden.

In dem anmeldungsgemäßen Betonfertigbauteil ist mindestens eine Führungsschiene integriert, insbesondere in Form einer Profilschiene und/oder einer Verschiebekulisse. In die Führungsschiene kann mindestens ein bewegliches Ladekabelträgerelement eingesetzt und von der Führungsschiene getragen werden. Insbesondere kann das Ladekabelträgerelement entlang der Führungsschiene zumindest teilweise (in einer im Wesentlichen horizontalen Richtung) bewegt werden. An einem Ladekabelträgerelement kann insbesondere ein Ladekabel aufgehangen sein, um eine Bewegung bzw. Verschiebung des Ladekabels entlang der Führungsschiene zu ermöglichen.

Vorzugsweise kann im bestimmungsgemäßen Gebrauch des Ladesystems eine Mehrzahl von Ladekabelträgerelementen in der mindestens einen Führungsschiene eingesetzt sein, um ein Ladekabel zu tragen und eine Verschiebung des Ladekabels zu ermöglichen.

Ferner kann bevorzugt die/der durch die Führungsschiene vorgegebene/r Bahn bzw. Lauf der bewegbaren Ladekabelträgerelemente eine Gerade sein. Bei anderen Varianten der Anmeldung können auch zumindest teilweise gekrümmte Verläufe durch eine entsprechend geformte Führungsschiene vorgesehen sein.

Besonders bevorzugt kann die mindestens eine Führungsschiene werkseitig in das Betonfertigbauteil integriert werden. Dieses hergestellte Betonfertigbauteil kann dann zum Aufstellungsort transportiert und dort montiert werden.

Insbesondere kann die mindestens eine Führungsschiene in das Betonfertigbauteil direkt beim Betonguss eingelassen werden.

Darüber hinaus umfasst das anmeldungsgemäße Betonfertigbauteil mindestens eine Ladevorrichtungsbefestigungsanordnung. Die Ladevorrichtungsbefestigungsanordnung erlaubt insbesondere eine Befestigung einer Ladevorrichtung an dem Betonfertigbauteil. Beispielsweise kann als Ladevorrichtungsbefestigungsanordnung mindestens ein (mechanisches) Befestigungsmittel vorgesehen sein, an welchem die Ladevorrichtung, beispielsweise durch ein hierzu korrespondierendes Befestigungsmittel, befestigt werden kann.

Eine anmeldungsgemäße Ladevorrichtung ist zum Laden eines Elektrofahrzeugs eingerichtet. Insbesondere kann die Ladevorrichtung Ladetechnik umfassen, die eingerichtet ist, ein Austauschen elektrischer Energie zwischen der Ladevorrichtung und dem Elektrofahrzeug zu steuern. Das Elektrofahrzeug kann über das Ladekabel an die Ladevorrichtung angeschlossen werden.

Unter einem Elektrofahrzeug ist vorliegend ein Fahrzeug, insbesondere Auto, zu verstehen, das zumindest teilweise elektrisch betrieben werden kann und mindestens einen wiederaufladbaren elektrischen Speicher umfasst.

Insbesondere kann durch die Bereitstellung eines Betonfertigbauteils mit integrierter Führungsschiene eine Installation von Ladesystemen in Parkanordnungen signifikant vereinfacht werden.

Wie bereits beschrieben wurde, kann das Betonfertigbauteil im montierten Zustand eine Seitenwand einer Parkanordnung bilden. Gemäß einer bevorzugten Ausführungsform des anmeldungsgemäßen Betonfertigbauteils kann das Betonfertigbauteil ein Deckenbauteil sein. Anders ausgedrückt kann das Betonfertigbauteil im montierten Zustand des Betonfertigbauteils zumindest einen Teil einer Decke einer Parkanordnung bilden. Dies ermöglicht es, ein Ladekabel entlang der Decke derart zu bewegen, dass in einfacher Weise eine Kopplung der elektrischen Ladevorrichtung mit dem elektrischen Ladeanschluss eines unterhalb des Deckenbauteils geparkten Elektrofahrzeugs über das Ladekabel erfolgen kann.

Gemäß einer weiteren Ausführungsform des anmeldungsgemäßen Betonfertigbauteils kann die Ladevorrichtungsbefestigungsanordnung in Form einer Ladevorrichtungsaufnahme gebildet sein. Ferner kann die Ladevorrichtungsbefestigungsanordnung einen integrierten elektrischen Netzanschluss aufweisen. Der Netzanschluss kann elektrisch mit einer elektrischen Energiequelle verbunden sein, beispielsweise ein Energieversorgungsnetz und/oder ein Erzeuger. Der elektrische Netzanschluss kann eingerichtet sein zum elektrischen Anschließen eines (elektrisch und/oder mechanisch zu dem Netzanschluss korrespondierenden) elektrischen Anschlusses der Ladevorrichtung. Da der elektrische Netzanschluss in dem Betonfertigbauteil bereits vormontiert ist, kann die Installation der Ladevorrichtung erleichtert werden.

Vorzugsweise kann in dem Betonfertigbauteil eine Aufnahme vorgesehen sein, die von umlaufenden Seitenwänden umgeben bzw. gebildet sein kann. Die Aufnahme korrespondiert in Form und/oder Dimension zu der anzubringenden Ladevorrichtung. Innerhalb der Aufnahme kann die Ladevorrichtung angeordnet und insbesondere mechanisch befestigt werden. Als Netzanschluss kann beispielsweise ein Netzanschlusskabel in der Aufnahme integriert sein, welches in ein Gehäuse der Ladevorrichtung einführbar ist und darin mit einem (internen) Anschluss der Ladevorrichtung elektrisch gekoppelt werden kann. Eine besonders aufwandsarme Montage eines Ladesystems ist möglich.

Das Betonfertigbauteil kann insbesondere plattenförmig gebildet sein. Beispielsweise kann das Betonfertigbauteil eine Mindestbreite von 2,5 m und eine Mindestlänge von 5 m aufweisen. Es versteht sich, dass bei anderen Varianten der Anmeldung das Betonfertigbauteil andere Dimensionen aufweisen kann.

Gemäß einer weiteren Ausführungsform des anmeldungsgemäßen Betonfertigbauteils kann die Länge des Betonfertigbauteils zumindest im Wesentlichen gleich oder größer der Länge der Parkbucht sein. Beispielsweise kann an der Unterseite des Betonfertigbauteils die Führungsschiene angeordnet sein. Die Oberseite des Betonfertigbauteils kann zumindest teilweise eine weitere Parkbucht bzw. einen weiteren Parkplatz einer weiteren Etage eines Parkhauses bilden. Eine Parkbucht ist vorliegend insbesondere eine planare Fläche, welche die Funktion hat, dass auf ihr ein Elektrofahrzeug, insbesondere in Form eines Elektroautos, geparkt bzw. abgestellt werden kann.

Alternativ oder zusätzlich kann die Länge der mindestens einen Führungsschiene des Betonfertigbauteils zumindest 50 %, bevorzugt zumindest 60 %, insbesondere bevorzugt zumindest 80 % der Länge der Parkbucht betragen. Vorzugsweise kann die Führungsschiene derart gebildet sein, dass ein an der Ladevorrichtung angeschlagenes Ladekabel mittels des mindestens einen in der Führungsschiene beweglich angeordneten Ladekabelträgerelements im Wesentlichen von einer Vorderkante zu einer Hinterkante der (mindestens einen) Parkbucht verschoben werden kann.

In einer weiteren Ausführungsform des Betonfertigbauteils kann die Länge des Betonfertigbauteils zumindest größer als die Breite von zwei benachbarten Parkbuchten sein. Im installierten bzw. montierten Zustand des Betonfertigbauteils kann die Führungsschiene zumindest teilweise die zumindest zwei benachbarten Parkbuchten überspannen. Insbesondere kann vorgesehen sein, dass zwei oder mehr benachbarte Parkbuchten durch die mindestens eine Führungsschiene, vorzugweise einer Mehrzahl von Führungsschienen, überspannt werden kann. Beispielsweise kann eine einzelne Ladevorrichtung mit mindestens einem Ladekabel vorgesehen sein, das unter Nutzung von mindestens einer Führungsschienen und darin angeordneter Ladekabelträgerelemente von mindestens zwei Parkbuchten aus genutzt werden kann.

Ein weiterer Aspekt der Anmeldung ist ein Ladesystem für Elektrofahrzeuge. Das Ladesystem umfasst mindestens ein Betonbauteil mit mindestens einer integrierten Führungsschiene. Insbesondere umfasst das Ladesystem als Betonteil ein zuvor beschriebenes Betonfertigbauteil. Das Ladesystem umfasst mindestens eine Ladevorrichtung. Die Ladevorrichtung kann an (oder in) dem Betonbauteil, insbesondere einer zuvor beschriebenen Ladevorrichtungsbefestigungsanordnung eines Betonfertigbauteils, oder einem anderen Bauteil, wie einem benachbarten Betonbauteil (z.B. Seitenwand, weiteres Deckenbauteil etc.), angeordnet sein. Das Ladesystem umfasst mindestens ein (fest) an der Ladevorrichtung angeschlagenes Ladekabel. Das Ladekabel ist durch mindestens ein beweglich in der Führungsschiene angeordnetes Ladekabelträgerelement getragen, insbesondere an diesem aufgehangen bzw. gelagert.

Gemäß einer ersten Ausführungsform des anmeldungsgemäßen Ladesystems kann die Ladevorrichtung mindestens ein in einem Gehäuse der Ladevorrichtung integriertes Ladetechnikmodul aufweisen. Das Ladetechnikmodul kann insbesondere den Austausch der elektrischen Energie zwischen einem Elektrofahrzeug und der Ladevorrichtung steuern. Beispielsweise kann der Stromfluss, wie die Freigabe und/oder Unterbrechung eines Ladestroms, durch das Ladetechnikmodul gesteuert werden. Es versteht sich, dass weitere Bauelemente in der Ladevorrichtung integriert sein können, wie Sicherheitstechnik, Zähler etc.

Gemäß einer bevorzugten Ausführungsform des anmeldungsgemäßen Ladesystems kann das mindestens eine Ladekabelträgerelement eine mit der Führungsschiene in Eingriff stehende Ladekabellaufkatze sein. Die Ladekabellaufkatze kann zumindest teilweise entlang der Führungsschiene bewegbar sein. Insbesondere kann eine Ladekabellaufkatze in einfacher Weise ein Ladekabel (zumindest teilweise) tragen und eine Verschiebbarkeit entlang der Führungsschiene bereitstellen.

Vorzugsweise kann das mindestens eine Ladekabelträgerelement mindestens ein in der Führungsschiene bewegliches Rollenmodul und/oder Gleitermodul aufweisen. Das Ladekabelträgerelement kann ein mit dem Rollenmodul und/oder Gleitermodul verbundenes Aufhängungsmodul aufweisen, an dem das Ladekabel aufhängbar ist.

Die Führungsschiene kann vorzugsweise ein T-förmiges oder C-förmiges Profil aufweisen und beispielsweise aus Kunststoff, Beton oder Metall gebildet sein. In dem mindestens einen durch die Führungsschiene gebildeten Lauf kann das mindestens eine Rollenmodul und/oder Gleitermodul eingreifen und insbesondere in einem montierten Zustand des Betonfertigbauteils in horizontaler Richtung bewegbar sein. Ein Rollenmodul und/oder ein Gleitermodul, welches in der Führungsschiene gleiten kann, ermöglicht ein einfaches Bewegen eines Ladekabels.

Das mindestens eine Rollenmodul und/oder Gleitermodul kann mit einem Aufhängungsmodul verbunden sein. Das Aufhängungsmodul dient zum Tragen des Ladekabels. Das Ladekabel kann insbesondere an dem Aufhängungsmodul gelagert sein.

Gemäß einer besonders bevorzugten Ausführungsform des anmeldungsgemäßen Ladesystems kann zwischen dem Rollenmodul und/oder Gleitermodul und dem Aufhängungsmodul eines Ladekabelträgerelements ein Balancermodul angeordnet, insbesondere zwischengeschaltet, sein. Ein Balancermodul in Form eines Federzugs und/oder Balancers (auch Seil- oder Kabelwickler genannt) ermöglicht eine Bewegung des Ladekabels (zumindest auch) in eine vertikale Richtung. Insbesondere kann durch ein Balancermodul das Ladekabel, insbesondere ein an dem Ladekabel angeordneter Ladeanschluss, von einem Nutzer herunterziehbar sein. Dies ermöglicht es dem Nutzer, den Ladeanschluss des Ladekabels mit dem Ladeanschluss des Elektrofahrzeugs in einfacher Weise zu koppeln.

Vorzugsweise kann das Balancermodul ein arretierbares Balancermodul sein. Hierunter ist zu verstehen, dass in einer bestimmten Auszugsposition des Balancermodul (zwischen einer minimalen und maximalen Auszugsposition) arretiert werden kann, um insbesondere den Zug auf das Kabel abzufangen. Dieses Prinzip kann auch als "Staubsaugerkabel-Prinzip" bezeichnet werden.

Darüber hinaus kann bei einer bevorzugten Ausführungsform des anmeldungsgemäßen Ladesystems das Ladekabel an einer Mehrzahl von hintereinander in der Führungsschiene angeordneten Ladekabelträgerelementen aufgehängt sein. Insbesondere ermöglicht dies, dass Ladekabel als "Girlanden-Ladekabel" auszuführen.

Für den Fall, dass eine Mehrzahl von hintereinander in der Führungsschiene angeordneten Ladekabelträgerelementen vorgesehen ist, kann zumindest (vorzugsweise nur) das Ladekabelträgerelement, das den größten Abstand zur Ladevorrichtung aufweist, ein Balancermodul aufweisen. Insbesondere kann an diesem Ladekabelträgerelement der Endbereich des Ladekabels, welches den Ladeanschluss aufweisen kann, angeordnet sein. Indem dieses letzte Ladekabelträgerelement (von der Ladevorrichtung aus gesehen) ein Balancermodul aufweist, kann eine einfache Kopplungsmöglichkeit mit dem Ladeanschluss des Elektrofahrzeugs bereitgestellt werden.

Gemäß einer weiteren Ausführungsform des anmeldungsgemäßen Ladesystems kann ein Ende des Ladekabels an der Ladevorrichtung (fest) angeschlagen sein. Hierunter ist zu verstehen, dass eine zerstörungsfreie Lösung des Ladekabels von der Ladevorrichtung werkzeuglos nicht möglich ist. Das weitere Ende des Ladekabels kann einen elektrischen Ladeanschluss mit einem Griffmodul aufweisen, derart, dass das weitere Ende des Ladekabels in horizontaler Richtung entlang der Führungsschiene und in vertikaler Richtung durch einen Nutzer bewegbar ist. Die Benutzerfreundlichkeit kann noch weiter verbessert werden.

Ferner kann mindestens eine mit der Ladevorrichtung (datentechnisch) verbindbare Nutzerkommunikationsvorrichtung angeordnet sein, insbesondere an einem weiteren Betonfertigbauteil. Beispielsweise kann an einer Seitenwand der Parkanordnung eine Nutzerkommunikationsvorrichtung angeordnet sein. Die Seitenwand kann benachbart zu der Parkbucht sein, die durch das Betonfertigbauteil mit der integrierten Führungsschiene überspannt wird.

Über ein drahtloses und/oder drahtgebundenes Netzwerk kann eine Kommunikationsverbindung mit der Ladevorrichtung herstellbar sein, die der Nutzerkommunikationsvorrichtung zugeordnet ist. Die Nutzerkommunikationsvorrichtung kann mindestens eine Nutzerschnittstelle aufweisen. Die Nutzerschnittstelle kann ein Touchdisplay, Nahfeldsensor etc. sein. Die Nutzerschnittstelle kann beispielsweise zum Eingeben einer Nutzerkennung, einer Fahrzeugkennung, Bezahldaten etc. eingerichtet sein und insbesondere eine Nutzerkommunikation ermöglichen.

Ein noch weiterer Aspekt ist eine Parkanordnung, insbesondere ein Parkhaus oder eine Fertigparkgarage, mit einem zuvor beschriebenen Ladesystem.

Ferner kann das zuvor beschriebene Betonfertigbauteil insbesondere als Deckenbauteil in einer (zuvor beschriebenen) Parkanordnung verwendet werden.

Die Merkmale der Bauteile, Systeme, Anordnungen und Verwendungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das anmeldungsgemäße Betonfertigbauteil, das anmeldungsgemäße Ladesystem, die anmeldungsgemäße Parkanordnung und die anmeldungsgemäße Verwendung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Betonfertigbauteils gemäß der vorliegenden Anmeldung,
- Fig. 2: eine schematische (Schnitt-)Ansicht eines weiteren Ausführungsbeispiels eines Betonfertigbauteils gemäß der vorliegenden Anmeldung, und
- Fig. 3: eine schematische Ansicht eines Ausführungsbeispiels eines Ladesystems gemäß der vorliegenden Anmeldung.

Nachfolgend werden für gleiche Elemente gleiche Bezugszeichen verwendet.

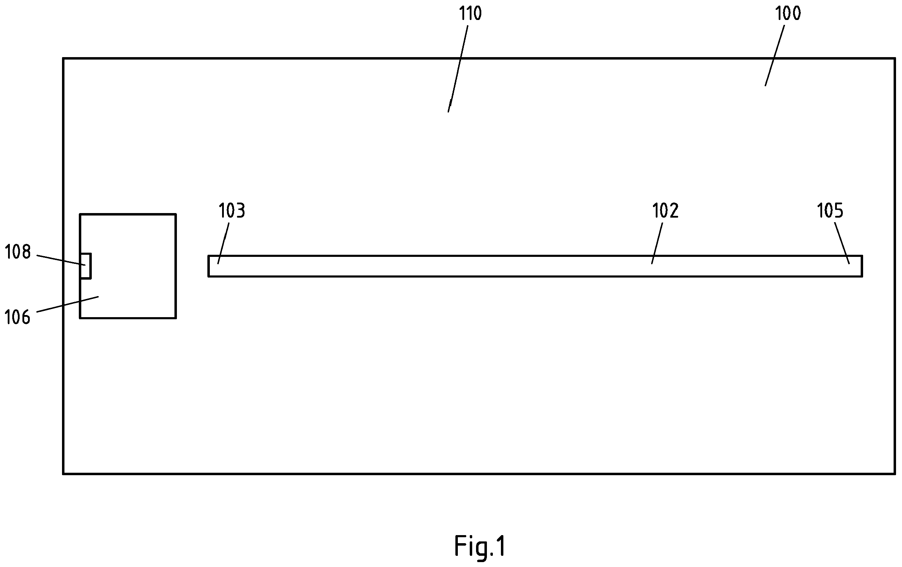

Die Figur 1 zeigt eine schematische Ansicht eines ersten Ausführungsbeispiels eines Betonfertigbauteils 100 gemäß der vorliegenden Anmeldung. Das dargestellte Betonfertigbauteil 100 ist ein Deckenbauteil 100 einer Parkanordnung. Insbesondere kann das Betonfertigbauteil 100 Teil einer Decke in einem Parkhaus oder einer Garage sein.

Das plattenförmige und vorliegend rechteckförmige Betonfertigbauteil 100 weist an seiner Unterseite 110 eine Führungsschiene 102 auf. Es versteht sich, dass ein anmeldungsgemäßes Betonfertigbauteil andere Formen aufweisen kann.

In der Führungsschiene 102 können bewegliche (nicht gezeigte) Ladekabelträgerelemente eingreifen, die ein Ladekabel tragen können. Insbesondere erlaubt die Führungsschiene zusammen mit mindestens einem Ladekabelträgerelement ein Verschieben des Ladekabels im Wesentlichen zwischen dem ersten, einer Ladevorrichtungsbefestigungsanordnung 106 zugewandten Ende 103 der Führungsschiene 102 und einem (gegenüberliegenden) weiteren, der Ladevorrichtungsbefestigungsanordnung 106 abgewandten Ende 105 der Führungsschiene. Dies wird nachfolgend noch näher ausgeführt.

Die Ladevorrichtungsbefestigungsanordnung 106 ist vorliegend als Ladevorrichtungsaufnahme 106 gebildet und dient der (mechanischen) Aufnahme einer (nicht gezeigten) Ladevorrichtung. Zum elektrischen Anschließen der Ladevorrichtung kann vorzugsweise in der Ladevorrichtungsbefestigungsanordnung 106 ein elektrischer Netzanschluss 108 integriert sein.

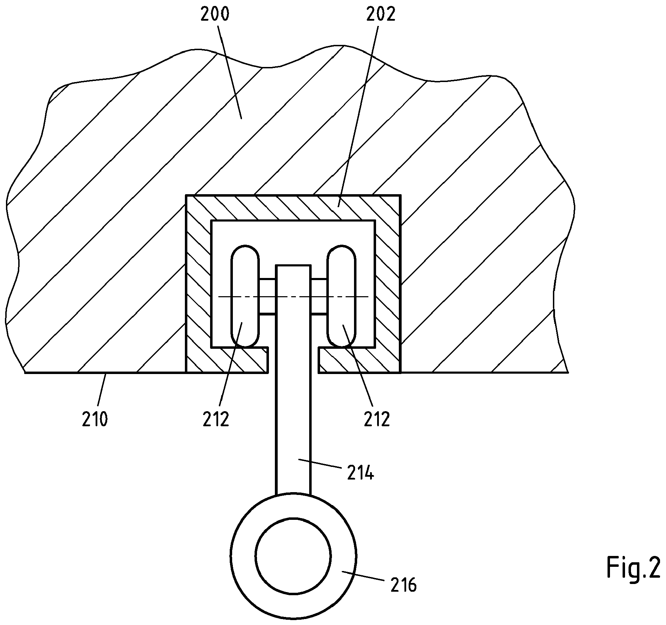

Die Figur 2 zeigt eine schematische (Schnitt-)Ansicht eines Ausführungsbeispiels eines Betonfertigbauteils 200 gemäß der vorliegenden Anmeldung. Wie zu erkennen ist, ist die mindestens eine Führungsschiene 202 in dem Betonfertigbauteil 200 integriert und kann beispielsweise bei Betonguss eingelassen werden. Die Führungsschiene 202 kann insbesondere als Kulisse 202 gebildet sein.

Vorliegend weist die Führungsschiene 202 ein T-förmiges Profil auf, in das ein Rollenmodul 212 eines Ladekabelträgerelements 214 eingreifen kann. In dem mindestens einen durch die Führungsschiene 202 gebildeten Lauf können vorzugsweise eine Mehrzahl von Rollenmodulen 212 (und/oder Gleitermodule) einer entsprechenden Mehrzahl an Ladekabelträgerelementen eingreifen und insbesondere in einer horizontalen Richtung laufen.

An dem Rollenmodul 212 ist vorliegend ein Aufhängungsmodul 216 angeordnet, an dem ein (nicht gezeigtes) Ladekabel aufgehangen bzw. gelagert werden kann. Es versteht sich, dass gemäß anderen Varianten der Anmeldung für eine Aufhängung des Ladekabels andere Aufhängungsarten eingesetzt werden können.

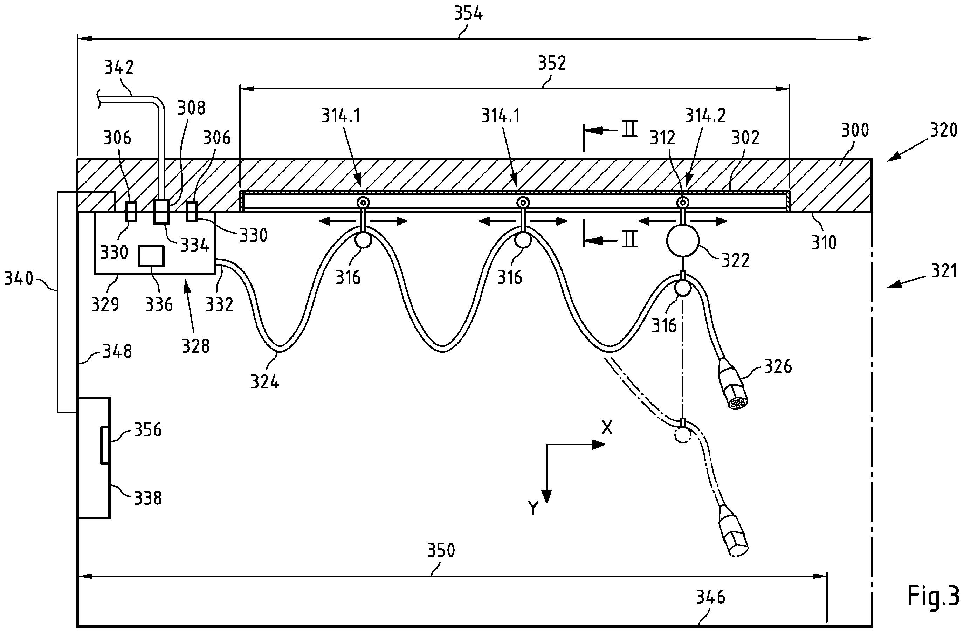

Die Figur 3 zeigt eine schematische Ansicht eines Ausführungsbeispiels eines Ladesystems 320 gemäß der vorliegenden Anmeldung. Zur Vermeidung von Wiederholungen werden nachfolgend im Wesentlichen nur die Unterschiede zu den Ausführungen nach Figur 1 und 2 beschrieben. Für die anderen Komponenten des Ladesystems 320 wird insbesondere auf die obigen Ausführungen verwiesen.

Insbesondere ist zumindest ein Teil einer Parkanordnung 321, vorliegend in Form eines Parkhauses 321 oder Parkgarage 321, schematisch in der Figur 3 dargestellt.

Die dargestellte Parkanordnung 321 weist einen Boden 346 auf, der eine Parkbucht 346 bildet, in der ein (nicht gezeigtes) Elektrofahrzeug geparkt werden kann. Ferner ist eine Seitenwand 348 und ein Deckenbauteil 300 vorgesehen, welches durch ein Betonbauteil 300, insbesondere ein zuvor beschriebenes Betonfertigbauteil 300, mit mindestens einer integrierten Führungsschiene 302 gebildet ist.

Im vorliegend dargestellten montierten Zustand des Betonbauteils 300 (nachfolgend wird davon ausgegangen, dass es ein Betonfertigbauteil 300 ist) und des Ladesystems 320 ist eine Ladevorrichtung 328 an dem Betonfertigbauteil 300, insbesondere einer vorliegend durch zwei mechanischen Befestigungsmittel 306 gebildeten Ladevorrichtungsbefestigungsanordnung 306 befestigt.

Zur Befestigung kann die Ladevorrichtung 328 über korrespondierende mechanische Befestigungsmittel 330 verfügen. Beispielsweise kann zur Befestigung eine Verschraubung oder dergleichen erfolgen. Bei anderen Varianten der Anmeldung kann die Ladevorrichtung 328 auch an einer anderen Stelle der Parkanordnung 321 positioniert sein.

Die Ladevorrichtung 328 weist einen elektrischen Anschluss 334 auf, der im dargestellten montierten Zustand mit einem in dem Betonfertigbauteil 300 integrierten Netzanschluss 308 elektrisch gekoppelt ist. Beispielsweise kann ein Netzanschlusskabel 342, welches mit einem Energieversorgungsnetz oder einer anderen Energiequelle verbunden ist, in ein Gehäuse 329 der Ladevorrichtung 328 eingeführt und darin mit einem internen Anschluss 334 der Ladevorrichtung 328 gekoppelt werden.

Die Ladevorrichtung 328 kann in ihrem Gehäuse 329 zumindest ein Ladetechnikmodul 336 aufweisen, das zur Steuerung eines Ladevorgangs mit einem Elektrofahrzeug (in herkömmlicher Weise) eingerichtet ist.

Wie zu erkennen ist, ist im vorliegenden Ausführungsbeispiel an der Ladevorrichtung 328 ein Ladekabel 324 angeschlagen. Das Ladekabel 324 wird vorliegend von einer Mehrzahl von Ladekabelträgerelementen 314.1, 314.2 girlandenförmig getragen. Die Ladekabelträgerelemente 314.1 können entsprechend den in Figur 2 dargestellten Ladekabelträgerelementen 214 gebildet sein. An dem jeweiligen Aufhängungsmodul 316 kann das Ladekabel 324 aufgehangen sein.

Die Ladekabelträgerelemente 314.1, 314.2 sind in der Führungsschiene 302 beweglich angeordnet und ermöglichen ein Bewegen des Ladekabels 324, insbesondere entlang der Führungsschiene 302, insbesondere in eine horizontale Richtung x, wie durch die Pfeile angedeutet ist. Insbesondere kann ein Nutzer das Ladekabel 324 manuell verschieben.

Vorliegend unterscheidet sich das Ladekabelträgerelement 314.2 von den anderen Ladekabelträgerelementen 314.1, welches den größten Abstand zur Ladevorrichtung 328 aufweist und/oder im Bereich eines Ladeanschlusses 326 des Ladekabels 324 angeordnet ist.

Vorliegend ist als Ladeanschluss 326 beispielhaft ein Ladestecker vom Typ2 nach IEC 62196-2 vorgesehen. Es versteht sich, dass bei anderen Varianten der Anmeldung als Ladeanschluss 326 auch eine Ladebuchse und/oder ein CCS (Combined Charging System) Ladeanschluss, Chademo Ladeanschluss oder dergleichen vorgesehen sein kann.

Das Ladekabelträgerelement 314.2 weist vorliegend ein Balancermodul 322 auf, welches insbesondere arretierbar ist. Insbesondere kann das Balancermodul 322 zwischen dem Rollenmodul 312 und dem Aufhängungsmodul 316 angeordnet sein.

Das Balancermodul 322 ermöglicht eine Bewegung des Ladeanschlusses 326 zumindest auch in eine vertikale Richtung y, so dass ein Nutzer das Ladekabel 324, insbesondere den Ladeanschluss 326, herunterziehen kann, um den Ladeanschluss 326 mit einem Ladeanschluss eines Elektrofahrzeugs zu koppeln.

An der Seitenwand 348 kann mindestens eine mit der Ladevorrichtung 328 (datentechnisch) verbindbare Nutzerkommunikationsvorrichtung 338 angeordnet sein. Über ein drahtloses und/oder drahtgebundenes Netzwerk 340 kann eine Kommunikationsverbindung mit der Ladevorrichtung 328 herstellbar sein.

Die Nutzerkommunikationsvorrichtung 338 kann mindestens eine Nutzerschnittstelle 356 aufweisen. Die Nutzerschnittstelle 356 kann ein Touchdisplay, Nahfeldsensor etc. sein. Die Nutzerschnittstelle 356 kann beispielsweise zum Eingeben einer Nutzerkennung, einer Fahrzeugkennung, Bezahldaten etc. eingerichtet sein.

Insbesondere kann ein Ladevorgang mittels der Nutzerkommunikationsvorrichtung 338 initiiert und/oder freigegeben werden. Es versteht sich, dass bei anderen Varianten hierfür ein Backendsystem zusätzlich vorgesehen sein kann.

Die Länge 354 des Betonfertigbauteils 300 kann insbesondere im Wesentlichen gleich der Länge 350 oder größer als die Länge der Parkbucht 346 sein. Die Länge 352 der Führungsschiene 302 kann zumindest 50 %, insbesondere zumindest 80 % der Länge der Parkbucht betragen.

## Patentansprüche

1. Betonfertigbauteil (100, 200, 300) für Parkanordnungen (321), insbesondere Parkhäuser (321), aufweisend:
- mindestens eine Führungsschiene (102, 202, 302), eingerichtet zum beweglichen Tragen mindestens eines Ladekabelträgerelements (214, 314.1, 314.2), und
- mindestens eine Ladevorrichtungsbefestigungsanordnung (106, 306), eingerichtet zum Befestigen mindestens einer Ladevorrichtung (328), eingerichtet zum Laden von Elektrofahrzeugen, an dem Betonfertigbauteil (100, 200, 300).

2. Betonfertigbauteil (100, 200, 300) nach Anspruch 1, **dadurch gekennzeichnet, dass**
- das Betonfertigbauteil (100, 200, 300) ein Deckenbauteil (100, 200, 300) ist.

3. Betonfertigbauteil (100, 200, 300) nach Anspruch 1 oder 2, **dadurch gekennzeichnet, dass**
- die Ladevorrichtungsbefestigungsanordnung (106, 306), insbesondere in Form einer Ladevorrichtungsaufnahme (106), einen integrierten elektrischen Netzanschluss (108, 308) aufweist,
- wobei der elektrische Netzanschluss (108, 308) eingerichtet ist zum elektrischen Anschließen eines elektrischen Anschlusses (330) der Ladevorrichtung (328) mit einer elektrischen Energiequelle.

4. Betonfertigbauteil (100, 200, 300) nach einem der vorherigen Ansprüche,
**dadurch gekennzeichnet, dass**
- die Länge (354) des Betonfertigbauteils (100, 200, 300) zumindest gleich der Länge (350) der Parkbucht (346) ist,
und/oder
- die Länge (352) der mindestens einen Führungsschiene (102, 202, 302) zumindest 50 %, bevorzugt zumindest 60 %, insbesondere bevorzugt zumindest 80 % der Länge der Parkbucht (346) beträgt.

5. Ladesystem (320) für Elektrofahrzeuge, umfassend:
- mindestens ein Betonbauteil (100, 200, 300) mit mindestens einer integrierten Führungsschiene,
- mindestens eine Ladevorrichtung (328),
- und mindestens ein an der Ladevorrichtung (328) angeschlagenes Ladekabel (324),
- wobei das Ladekabel (324) durch mindestens ein beweglich in der Führungsschiene (102, 202, 302) angeordnetes Ladekabelträgerelement (214, 314.1, 314.2) getragen ist.

6. Ladesystem (320) nach Anspruch 5, **dadurch gekennzeichnet, dass**
- die Ladevorrichtung (328) mindestens ein in einem Gehäuse (329) der Ladevorrichtung (328) integriertes Ladetechnikmodul (336) aufweist.

7. Ladesystem (320) nach Anspruch 5 oder 6, **dadurch gekennzeichnet, dass**
- das mindestens eine Ladekabelträgerelement (214, 314.1, 314.2) eine mit der Führungsschiene (102, 202, 302) in Eingriff stehende Ladekabellaufkatze (214, 314.1, 314.2) ist,
- wobei die Ladekabellaufkatze (214, 314.1, 314.2) zumindest teilweise entlang der Führungsschiene (102, 202, 302) bewegbar ist.

8. Ladesystem (320) nach einem der vorherigen Ansprüche 5 bis 7, **dadurch gekennzeichnet, dass**
- das mindestens eine Ladekabelträgerelement (214, 314.1, 314.2) mindestens ein in der Führungsschiene (102, 202, 302) bewegliches Rollenmodul (212, 312) und/oder Gleitermodul aufweist, und
- das Ladekabelträgerelement (214, 314.1, 314.2) ein mit dem Rollenmodul (212, 316) und/oder Gleitermodul verbundenes Aufhängungsmodul (216, 316) aufweist, an dem das Ladekabel (324) aufhängbar ist.

9. Ladesystem (320) nach Anspruch 8, **dadurch gekennzeichnet, dass**
- zwischen dem Rollenmodul (212, 312) und dem Aufhängungsmodul (216, 316) eines Ladekabelträgerelements (214, 314.1, 314.2) ein Balancermodul (322) angeordnet ist.

10. Ladesystem (320) nach Anspruch 9, **dadurch gekennzeichnet, dass**
- das Balancermodul (322) ein arretierbares Balancermodul (322) ist.

11. Ladesystem (320) nach Anspruch 9 oder 10, **dadurch gekennzeichnet, dass**
- das Ladekabel (324) an einer Mehrzahl von hintereinander in der Führungsschiene (102, 202, 302) angeordneten Ladekabelträgerelementen (214, 314.1, 314.2) aufgehängt ist, und
- zumindest das Ladekabelträgerelement (314.2), das den größten Abstand zur Ladevorrichtung (328) aufweist, ein Balancermodul (322) aufweist.

12. Ladesystem (320) nach Anspruch 11, **dadurch gekennzeichnet, dass**
- ein Ende (332) des Ladekabels (324) an der Ladevorrichtung (328) angeschlagen ist,
- das weitere Ende (326) des Ladekabels (324) einen elektrischen Ladeanschluss (326) mit einem Griffmodul aufweist, derart, dass das weitere Ende des Ladekabels (324) in horizontaler Richtung entlang der Führungsschiene (102, 202, 302) und in vertikaler Richtung durch einen Nutzer bewegbar ist.

13. Ladesystem (320) nach einem der vorherigen Ansprüche, **dadurch gekennzeichnet, dass**
- mindestens eine mit der Ladevorrichtung (328) verbindbare Nutzerkommunikationsvorrichtung (338) angeordnet ist, insbesondere an einem weiteren Betonbauteil (348).

14. Verwendung eines Betonfertigbauteils (100, 200, 300) nach einem der Ansprüche 1 bis 4 als Deckenbauteil (100, 200, 300) in einer Parkanordnung (321).
